# EUROPÄISCHE PATENTSCHRIFT

(11) **EP 0 641 134 B1**
(45) Veröffentlichungstag und Bekanntmachung des Hinweises auf die Patenterteilung: **12.05.1999**
(21) Anmeldenummer: 94112710.2
(22) Anmeldetag: 13.08.1994
(51) Int. Cl.: H04Q 3/62

(54) **Verfahren zur Anruflenkung für ein privates, virtuelles Netz, sowie Dienstrechner und Vermittlungsstelle dafür**
Method for routing of calls in a private virtual network and a service processor and a telephone exchange therefor
Procédé pour le routage d'appels dans un réseau privé et virtuel, ainsi qu'un processeur de service et un centrale téléphonique pour cela

(30) Priorität: 30.08.1993 DE 4329172
(43) Veröffentlichungstag der Anmeldung: 01.03.1995
(73) Patentinhaber: ALCATEL, 75008 Paris (FR)
(72) Erfinder: Lautenschlager, Wolfgang, D-71287 Weissach-Flacht (DE)
(74) Vertreter: Brose, Gerhard, Dipl.-Ing.

(56) Entgegenhaltungen:
- EP-A- 0 583 135
- US-A- 4 348 554
- DISCOVERING A NEW WORLD OF COMMUNICATIONS, CHICAGO, JUNE 14 - 18, 1992, Bd. 2 OF 4, 14.Juni 1992, INSTITUTE OF ELECTRICAL AND ELECTRONICS ENGINEERS, Seiten 561-565, XP000326744 ATOUI M: "VIRTUAL PRIVATE NETWORK CALL PROCESSING IN THE INTELLIGENT NETWORK"
- IEEE COMMUNICATIONS MAGAZINE, Bd. 30, Nr. 3, 1.März 1992, Seiten 80-85, XP000297353 BROSEMER J J ET AL: "VIRTUAL NETWORKS: PAST, PRESENT AND FUTURE"
- TELESIS, Bd. 15, Nr. 3, 1988, Seiten 23-25, 28 - 31, XP000007730 DAVIS M ET AL: "EVOLUTION IN BUSINESS NETWORKING"
- ONDE ELECTRIQUE, Bd. 70, Nr. 1, 1.Januar 1990, Seiten 28-31, XP000094682 BOWYER R ET AL: "GESTION DE RESEAU INTELLIGENT D'UN SERVICE DE RESEAU VIRTUEL PRIVE AU MOYEN DE POINT DE CONTROLE DU SERVICE"
- INTERNATIONAL SWITCHING SYMPOSIUM - PAPER B3.2, Bd. 1, 15. - 20.März 1987, PHOENIX (US), Seiten 202-208, XP002018265 A. CHATTERJEE: "Special services (SS) and Virtual private network (VPN) planning"

## Beschreibung

Die Erfindung betrifft ein Verfahren zur Anruflenkung für ein privates, virtuelles Netz nach dem Oberbegriff von Anspruch 1, einen Dienstrechner zum Anschluß an ein Netz nach dem Oberbegriff von Anspruch 9 und eine Vermittlungsstelle nach dem Oberbegriff von Anspruch 10.

In den meisten Ländern haben sich im Laufe der Zeit zwei verschiedene Netztypen entwickelt. Zum einen ein öffentliches Telekommunikationsnetz (z.B. Fernsprechnetz, ISDN-Netz) und zum anderen eine nicht unerhebliche Zahl von Privat- oder Sondernetzen. Im Folgenden wird nun der Begriff privates Netz für diesen Typ von Telekommunikationsnetz verwendet.

Ein privates Netz besteht in den meisten Fällen aus einer Nebenstellenanlage, an die mehrere Fernsprechendgeräte angeschlossen sind und die über eine Verbindung zum öffentlichen Netz verfügt. Ein solches Netz findet man z.B. häufig bei Firmen oder Behörden.

Besitzt nun eine Firma mehrere räumlich getrennte Standorte, so ist für jeden dieser Standorte eine eigene Nebenstellenanlage notwendig. Diese Nebenstellenanlagen werden dann häufig über gemietete öffentliche Festverbindungen miteinander verknüpft. Hierdurch ist es für Gespräche innerhalb der Firma notwendig, sich über diese Festverbindungen in die Nebenstellenanlage des Gesprächspartners einzuwählen.

In US-A-4 348 554 wird weiter beschrieben, wie mittels einer zentralen Datenbank und mehreren Bearbeitungsknoten ein virtuelles privates Netz (VPN) Teilnehmern als Dienst zur Verfügung gestellt werden kann. Die Datenbank enthält hierbei Daten, die die Kapazität des virtuellen privaten Netzes und die Kommunikationsrechte der einzelnen Endgeräte des virtuellen privates Netzes bestimmen. Mittels dieser Daten wird ermittelt, ob eine Verbindung durch das virtuelle private Netz aufgebaut wird oder nicht und über welche Ressourcen des privaten virtuellen Netzes der Aufbau erfolgt. Für die Adressierung der Endgeräte des virtuellen privaten Netzes wird hierbei der öffentliche Nummerierungsbereich verwendet.

In dem Artikel "Evolution in business networking", Telesis, Bd. 15, Nr. 3, 1988, Seiten 23 bis 31 von M. Davis et al. wird ebenfalls ein Dienst beschrieben, mittels dem ein virtuelles privates Netz bereitgestellt werden kann. Dieser Dienst kann hierbei innerhalb des privaten virtuellen Netzes einen privaten Nummerierungsplan bereitstellen. Ein weiteres Leistungsmerkmal dieses Dienstes besteht darin, das Benutzen eines Leitungsbündels sowohl für den Verkehr innerhalb eines privaten Netzes, als auch für den Verkehr eines anderen privaten Netzes oder des öffentlichen Netzes zu ermöglichen.

Auch in dem Artikel "Virtual private network call processing in the intelligent network", Supercomm/ ICC ' 92, "Discovering a new world of communications", Bd. 2, 14. bis 18. Juni 1992, 14. Juni 1992, Chicago, US, Seiten 561 bis 565 von M. Atoui ist ein Dienst beschrieben, der ein virtuelles privates Netz Teilnehmern zur Verfügung stellt. Dieser Dienst bearbeitet nur Verbindungsanforderungen, die von Teilnehmern des virtuellen privaten Netzes stammen. Falls ein Teilnehmer nicht in seinem Büro ist und somit nicht durch seinen Teilnehmeranschluß zu identifizieren ist, kann er sich durch einen Autorisierungscode auszeichnen und Zugang zu diesem Dienst erhalten.

Die Erfindung geht nun von einem weiteren Lösungsansatz für das Problem eines überörtlichen oder auch überregionalen Netzes aus, der z.B. in dem Kapitel '5.3.2 Virtuelle Private Netze' aus dem Buch 'Neue Dienste im intelligenten Telephonnetz' von Wilhelm Krasch, herausgegeben vom RV. Decker's Verlag G. Schenk, beschrieben ist.

Bei diesem Lösungsansatz, sind die verschiedenen Nebenstellenanlagen einer Firma nicht über gemietete Standleitungen, sondern über Wählverbindungen miteinander verknüpft. Der Aufbau dieser Wählverbindungen erfolgt nur im Bedarfsfall und wird von einem Dienst des öffentlichen Netzes unterstützt, dem Dienst Virtuelle Private Netze (VPN). Jedem Endgerät des privaten Netzes ist eine Rufnummer nach einem privaten Nummerierungsplan zugeordnet. Erfolgt nun ein Ruf aus dem Bereich einer ersten Nebenstellenanlage in den Bereich einer zweiten Nebenstellenanlage, so wählt die erste Nebenstellenanlage den Dienst an und teilt ihm die Nummer des gewünschten Teilnehmers nach dem privaten Nummerierungsplan mit. Der Dienst ermittelt nun die Rufnummer der entsprechenden Nebenstellenanlage, ergänzt die private Nummer um die Rufnummer der Nebenstellenanlage und veranlaßt die weitere Vermittlung des Rufes. Bevor dieser Dienst jedoch erbracht wird, wird überprüft, ob der Ruf überhaupt von einer Nebenstellenanlage des privaten Fernsprechnetzes stammt. Nur wenn dies zutrifft, wird der Dienst erbracht. Es ist hierbei auch noch möglich, daß außer Nebenstellenanlagen auch einzelne Endgeräte diesen Dienst verwenden können.

So wird das private Netz von mehreren Nebenstellenanlagen oder einzelnen Endgeräten gebildet, die im Bedarfsfall über Wählverbindungen des öffentlichen Netzes miteinander kommunizieren, wobei der Verbindungsaufbau über das öffentliche Netz von dem Dienst VPN unterstützt wird. Es handelt sich hierbei um ein virtuelles privates Netz, da die Wählverbindungen des öffentlichen Netzes nicht Bestandteil des privaten Netzes sind.

Für die Teilnehmer eines solchen überörtlichen, privaten virtuellen Netzes erscheint es so, als ob sie über eine einzige Nebenstellenanlage miteinander verknüpft sind. Das ganze überörtliche, aus mehreren Teilnetzen bestehende virtuelle private Netz wirkt so für sie wie ein einziges Netz. Dieser erwünschte Effekt ergibt sich jedoch nur für die Teilnehmer des privaten Netzes. Bei Rufen von außerhalb des privaten Netzes ist es nötig, zuerst die richtige Nebenstellenanlage am Ort des gewünschten Teilnehmers und dann die Nummer des gewünschten Teilnehmers zu wählen.

Der Erfindung liegt so die Aufgabe zugrunde, auch für Anrufer von außerhalb ein virtuelles privates Netz wie ein einziges Netz wirken zu lassen.

Die Aufgabe wird gelöst durch ein Verfahren nach der Lehre des Anspruchs 1, durch einen Dienstrechner nach der Lehre des Anspruchs 9 und durch eine Vermittlungsstelle nach der Lehre des Anspruchs 10.

Die Erfindung baut auf der Erkenntnis auf, daß der eben beschriebene Dienst VPN bereits über alle Informationen verfügt, um eine Nummer nach dem privaten Nummerierungsplan die korrespondierende Nummer der Nebenstellenanlage oder des Einzelapparates nach dem Nummerierungsplan des öffentlichen Netzes zuzuweisen.

So ist es der Grundgedanke der Erfindung, daß ein und derselbe Dienst sowohl die Vermittlung von Rufen von innerhalb als auch von außerhalb des privaten Netzes unterstützt und dabei den Verbindungen unterschiedliche Tarifierungsattribute zuweist. Die unterschiedliche Tarifierung ist deshalb notwendig, da ansonsten auch die Gebühren für Rufe von außerhalb dem Betreiber des privaten virtuellen Netzes angelastet würden.

Vorteilhafte Ausgestaltungen der Erfindung sind den Unteransprüchen zu entnehmen.

Die Erfindung hat den Vorteil, daß die Möglichkeit besteht, daß alle Standorte einer Firma unter einer firmeneinheitlichen, landesweiten Rufnummer erreichbar sind. Ein Anrufer von außerhalb benötigt so nur diese Firmennummer und die Rufnummer des gewünschten Teilnehmers nach dem privaten Nummerierungsplan. Daraus ergibt sich der Vorteil, daß der private Nummerierungsplan sowohl für Rufe von innerhalb als auch für Rufe von außerhalb des privaten virtuellen Netzes gültig ist. So kann z.B. ein Teilnehmer bei einem Umzug in den Bereich einer anderen Nebenstellenanlage des privaten virtuellen Netzes seine Rufnummer behalten.

Im folgenden wird die Erfindung anhand eines Ausführungsbeispiels unter Zuhilfenahme der beiliegenden Zeichnungen weiter erläutert.

Fig. 1 zeigt eine symbolische Darstellung einer Kommunikationsanordnung mit einem erfindungsgemäßen Dienstrechner.

Fig. 2 zeigt ein Blockschaltbild eines erfindungsgemäßen Dienstrechners nach Fig. 1.

Im folgenden wird nun die Anwendung des erfindungsgemäßen Verfahrens in einer Kommunikationsanordnung verdeutlicht, die aus einem privaten virtuellen Netz und einem öffentlichen Netz besteht.

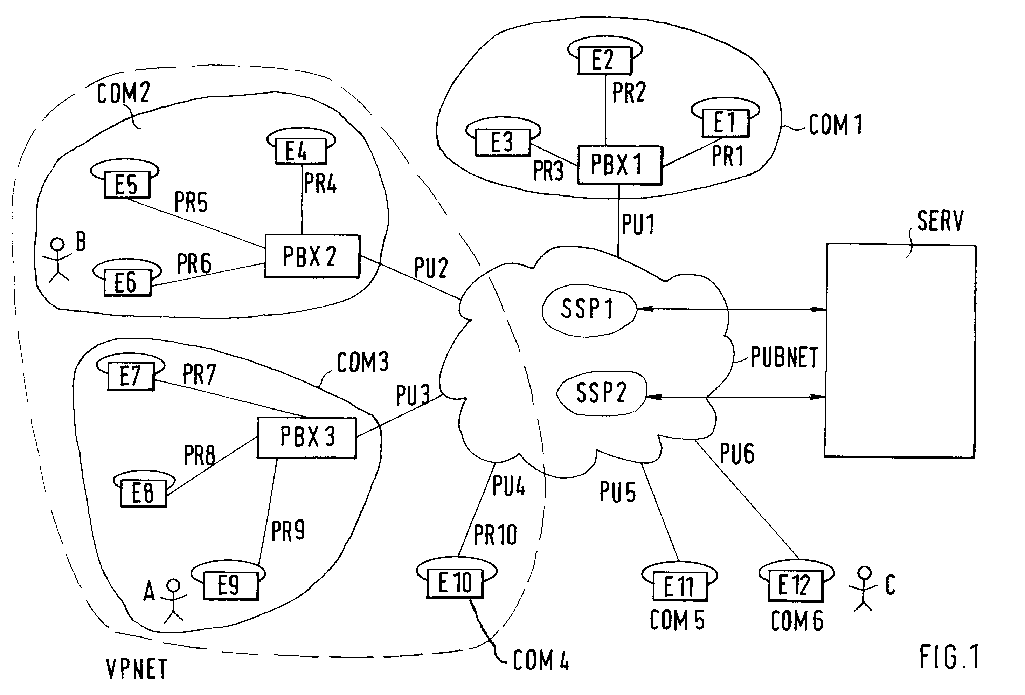

Fig. 1 zeigt 6 Kommunikationseinheiten COM1 bis COM6, ein öffentliches Netz PUBNET und einen Dienstrechner SERV.

Die Kommunikationseinheiten COM1 bis COM6 und der Dienstrechner SERV sind mit dem öffentlichen Netz PUBNET verbunden. Mittels des öffentlichen Netzes PUBNET können Kommunikationsverbindungen zwischen den Kommunikationseinheiten COM1 bis COM6 geschaltet werden.

Die Kommunikationseinheiten COM2, COM3 und COM4 bilden zusammen mit Verbindungen des öffentlichen Netzes ein virtuelles privates Netz VPNET. Virtuell bedeutet in diesem Zusammenhang, daß die Kommunikationseinheiten COM2 bis COM4 im Bedarfsfall über Wählverbindungen des öffentlichen Netzes PUBNET miteinander kommunizieren und somit keine feste Zuordnung dieser Verbindungswege zu dem privaten virtuellen Netz VPNET möglich ist.

Die Kommunikationseinheit COM1 wird von einer Nebenstellenanlage gebildet, die aus einer Nebenstellenvermittlung PBX1 und drei mit dieser verbundenen Endgeräten E1 bis E3 besteht. Bei den Kommunikationseinheiten COM2 und COM3 handelt es sich jeweils ebenso um Nebenstellenanlagen, die aus einer Nebenstellenvermittlung PBX2 bzw. PBX3 und drei Endgeräten E4 bis E6 bzw. E7 bis E9 bestehen. Die Kommunikationseinheiten COM4 bis COM6 werden jeweils von einem Endgerät E10, E11 bzw. E12 gebildet.

Die Endgeräte E1 bis E12 werden jeweils von einem Endgerät für ein Telekommunikationsnetz gebildet, wie z.B. Telephon, Fax oder einem entsprechend ausgestalteten Computer.

Es ist auch eine andere Anzahl von Kommunikationseinheiten oder eine andere Zusammensetzung der Kommunikationseinheiten möglich.

In der Kommunikationsanordnung nach Fig. 1 gibt es zwei verschiedene Nummerierungspläne. Ein öffentlicher Nummerierungsplan ordnet jedem Anschluß an das öffentliche Netz eine öffentliche Rufnummer zu. Den Kommunikationseinheiten COM1 bis COM6 sind so die Nummern PU1 bis PU6 zugeordnet. Ein privater Nummerierungsplan ordnet jedem Endgerät des privaten virtuellen Netzes eine private Rufnummer zu. Den Endgeräten E4 bis E10 sind so die privaten Rufnummern PR4 bis PR10 zugeordnet.

Das öffentliche Netz PUBNET ist wie ein übliches Telekommunikationsnetz ausgestaltet. Es enthält so auch mehrere Vermittlungsstellen. Von diesen Vermittlungsstellen sind zwei Vermittlungsstellen SSP1 und SSP2 besonders ausgestaltet. Die Vermittlungsstellen SSP1 und SSP2 übermitteln beim Auftreten einer bestimmten Ausscheidenummer Anfragen an den Dienstrechner SERV. Diese Ausscheidenummer wird im folgenden als Dienstkennung bezeichnet. Als Antwort darauf erhalten sie Informationen, die die weitere Behandlung des Rufes betreffen.

Es ist möglich, daß eine andere Anzahl von Vermittlungsstellen wie die Vermittlungsstelle SSP1 und SSP2 ausgestaltet und mit dem Dienstrechner SERV verbunden ist. Es ist jedoch mindestens eine solche Vermittlungsstelle notwendig.

Der Dienstrechner SERV erhält von den Vermittlungsstellen SSP1 und SSP2 Daten über eine private Rufnummer, die Ziel eines Rufes ist und Daten über die Herkunft dieses Rufes. Anhand dieser Daten veranlaßt der Dienstrechner SERV dann die weitere Vermittlung zu einer öffentlichen Rufnummer und die Tarifierung des Rufes.

Bei den Endgeräten E6, E9 und E12 befindet sich jeweils ein Teilnehmer B, A bzw. C.

Innerhalb des privaten virtuellen Netzes VPNET ergibt sich so folgendes Vorgehen. Will Teilnehmer A den Teilnehmer B erreichen, so wählt er dessen private Rufnummer PR6. Die Nebenstellenvermittlung PBX3 erkennt, daß die Rufnummer PR6 nicht in ihrem Bereich liegt und wählt im öffentlichen Netz eine Rufnummer, die sich aus der Dienstkennung und der privaten Rufnummer PR6 zusammensetzt. Die Vermittlungsstelle SSP1 oder SSP2 erkennt die Dienstkennung und aktiviert den Dienstrechner SERV. Dieser bestimmt die öffentliche Rufnummer PU2, unter der das Endgerät E6 mit der privaten Rufnummer PR6 zu erreichen ist und veranlaßt die weitere Vermittlung des Rufes zu der öffentlichen Rufnummer PU2. Daneben veranlaßt der Dienstrechner SERV auch die Tarifierung des Rufes. Die Nebenstellenvermittlung PBX2 empfängt den Ruf über ihre Amtsleitung und leitet ihn auf Grund der privaten Rufnummer PR6 an das Endgerät E6 weiter.

Will nun Teilnehmer C, der nicht Mitglied des privaten virtuellen Netzes VPNET ist, den Teilnehmer B erreichen, so wählt dieser die Dienstkennung als Vorwahl des privaten Netzes VPNET und anschließend die private Rufnummer PR6 des Teilnehmers B. Der Ruf wird wieder von einer der Vermittlungsstellen SSP1 und SSP2 erkannt und der Dienstrechner SERV veranlaßt wieder die Vermittlung zur Rufnummer PU2.

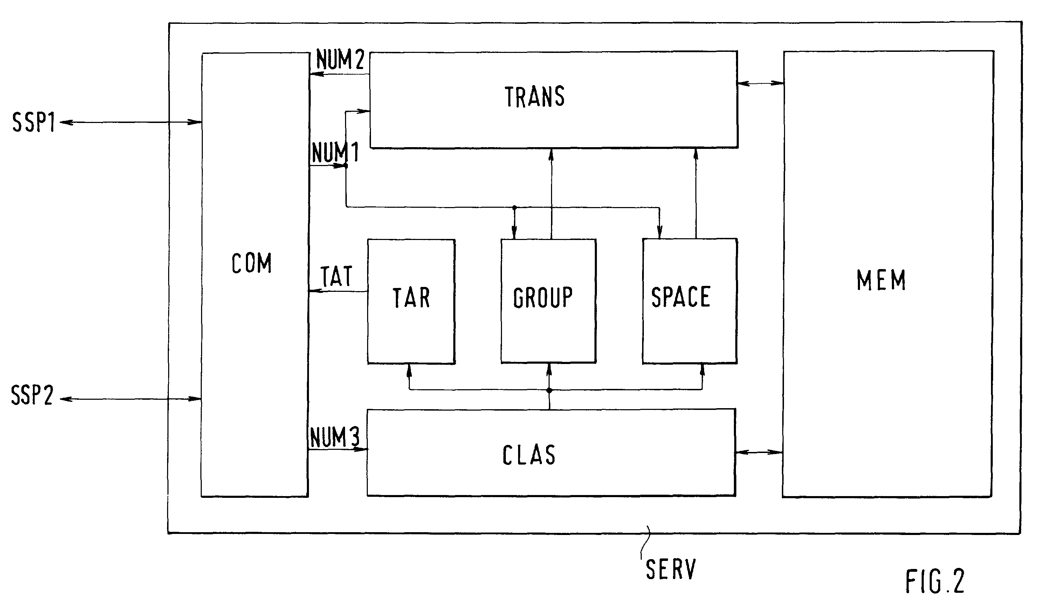

Der genaue Funktionsablauf im Dienstrechner SERV und zwischen dem Dienstrechner SERV und den beiden Vermittlungsstellen SSP1 und SSP2 wird nun anhand von Fig. 2 verdeutlicht.

Fig. 2 zeigt den Dienstrechner SERV. Der Dienstrechner SERV weist eine Kommunikationseinrichtung COM, eine Klassifizierungseinrichtung CLAS, eine Speichereinrichtung MEM, eine Umwerteinrichtung TRANS, eine Tarifierungseinrichtung TAR, eine Gruppierungseinrichtung GROUP und eine Adressierungseinrichtung SPACE auf.

Die Kommunikationseinrichtung COM tauscht Daten mit den Vermittlungsstellen SSP1 und SSP2 aus und empfängt Tarifierungsdaten von der Tarifierungseinrichtung TAR. Die Klassifizierungseinrichtung empfängt Daten über eine Rufnummer NUM3 von der Kommunikationseinrichtung COM, liest Daten aus der Speichereinrichtung MEM aus und sendet Daten an die Tarifierungseinrichtung TAR, an die Gruppierungseinrichtung GROUP und an die Adressierungseinrichtung SPACE. Die Umwerteinrichtung TRANS erhält von der Kommunikationseinrichtung COM Daten über eine Rufnummer NUM1 und teilt dieser wiederum Daten über eine Rufnummer NUM2 mit. Darüberhinaus liest sie Daten aus der Speichereinrichtung MEM aus und empfängt Daten von der Gruppierungseinrichtung GROUP und der Adressierungseinrichtung SPACE. Die Gruppierungseinrichtung GROUP und die Adressierungseinrichtung SPACE empfangen Daten über die Rufnummer NUM1 von der Kommunikationseinrichtung COM.

Die Kommunikationseinrichtung COM dient zur Kommunikation mit den Vermittlungsstellen SSP1 und SSP2. Erkennt eine der beiden Vermittlungsstellen SSP1 und SSP2 die Dienstkennung am Anfang einer Rufnummer, so sendet sie an den Dienstrechner SERV eine Anforderung. Diese Anforderung enthält Daten über eine gerufene private Rufnummer NUM1 und über eine öffentliche Rufnummer NUM3, die der Kommunikationseinheit gehört, von der der Ruf stammt. Die Kommunikationseinrichtung COM reicht die öffentliche Rufnummer NUM3 an die Klassifizierungseinrichtung CLAS und die private Rufnummer NUM1 an die Umwerteinrichtung TRANS, an die Gruppierungseinrichtung GROUP und an die Adressierungseinrichtung SPACE weiter. Die Kommunikationseinrichtung COM ihrerseits erhält von der Umwerteinrichtung TRANS Daten über eine öffentliche Rufnummer NUM2 oder eine Mitteilung, daß keine solche Rufnummer verfügbar ist und von der Tarifierungseinrichtung TAR Daten über Tarifierungsattribute TAT.

Die Daten über die Rufnummer NUM2 oder die Mitteilung darüber, daß keine solche Rufnummer verfügbar ist und die Tarifierungsattribute TAT werden an die Vermittlungsstelle SSP1 oder SSP2 weitergereicht, je nachdem, von welcher der beiden die Anforderung stammt. Diese Daten veranlassen dann die entsprechende Vermittlungsstelle SSP1 oder SSP2 den Ruf zur öffentlichen Rufnummer NUM2 weiterzuvermitteln oder ihn abzuweisen. Die Tarifierung des Rufs wird dabei durch die Tarifierungsattribute TAT festgelegt.

In der Speichereinrichtung MEM sind Daten über eine Zuordnung von öffentlichen Rufnummern zu privaten Rufnummern abgelegt. Jeder Rufnummer nach dem privaten Nummerierungsplan ist diejenige öffentliche Rufnummer zugeordnet, über die sie zu erreichen ist. So sind z.B. den privaten Rufnummern PR4, PR5 und PR6 die öffentliche Rufnummer PU2 und der privaten Rufnummer PR10 die öffentliche Rufnummer PU4 zugeordnet.

Die Klassifizierungseinrichtung CLAS prüft, ob ein Ruf von einer der Kommunikationseinheiten COM2 bis COM4 des privaten virtuellen Netzes VPNET stammt. Sie erhält von der Kommunikationseinrichtung COM Daten über die öffentliche Rufnummer NUM3 und überprüft, ob diese Rufnummer in dem Datensatz, der in der Speichereinrichtung MEM abgelegt ist, als öffentliche Rufnummer einer privaten Rufnummer zugeordnet ist. Ist dies der Fall, so handelt es sich bei der Rufnummer NUM3 um die öffentliche Rufnummer einer Kommunikationseinheit des privaten virtuellen Netzes VPNET. Nach dieser Überprüfung teilt sie der Tarifierungseinrichtung TAR, der Gruppierungseinrichtung GROUP und der Adressierungseinrichtung SPACE mit, ob die Rufnummer NUM3 einer Kommunikationseinheit des privaten virtuellen Netzes VPNET gehört oder nicht.

Es ist auch möglich, die Frage, ob ein Ruf von einer Kommunikationseinheit des privaten virtuellen Netzes VPNET stammt, anders zu klären. Z.B. könnte jede der Kommunikationseinheiten des virtuellen privaten Netzes VPNET in der Wählinformation zusätzlich zur Dienstkennung und zur privaten Rufnummer eine Ziffernfolge einfügen, die als Kenncode fungieren würde. In diesem Fall wäre es dann Aufgabe der Klassifizierungseinrichtung CLAS, diesen Kenncode zu identifizieren und das Ergebnis weiterzuleiten.

Die Tarifierungseinrichtung TAR legt die Tarifierungsattribute TAT für einen Ruf fest. Dafür erhält sie von der Klassifizierungseinrichtung CLAS Daten darüber, ob der Ruf aus dem privaten virtuellen Netz VPNET stammt oder nicht. Für jeden dieser beiden Fälle legt sie andere Tarifierungsattribute TAT fest und übermittelt diese dann an die Kommunikationseinrichtung COM.

Bei den Tarifierungsattributen TAT handelt es sich darum, welcher Teilnehmer eine Verbindung zahlt und welche Tarifgruppe der Verbindung zugrunde gelegt wird. Bei einer Tarifgruppe handelt es sich dabei um eine Preisliste für Verbindungen, die einer Gruppe von Teilnehmern des öffentlichen Netzes zugeordnet ist. Alle Verbindungen, die von Teilnehmern des privaten virtuellen Netzes VPNET veranlaßt werden, werden dem Betreiber des privaten virtuellen Netzes VPNET angelastet. Für diesen Großkunden gilt auch eine ganz spezielle Tarifgruppe. Alle Verbindungen, die aufgrund von Rufen von außerhalb des privaten virtuellen Netzes VPNET zustande kommen, werden dem rufenden Teilnehmer angelastet, wobei eine normale Tarifgruppe zugrundegelegt wird.

Auch andere Arten oder eine andere Zuteilung von Tarifierungsattributen ist möglich. Insbesondere ist es möglich, daß Verbindungen, die aufgrund von Rufen von außerhalb des privaten virtuellen Netzes VPNET zustande kommen, ganz oder teilweise vom Betreiber des virtuellen privaten Netzes VPNET bezahlt werden. Hierbei ist es auch möglich, daß die Aufteilung der Gebühren in Abhängigkeit von der Rufnummer NUM3 des rufenden Teilnehmers erfolgt.

Die Umwerteinrichtung TRANS übermittelt der Kommunikationseinrichtung COM als Antwort auf die private Rufnummer NUM1 die öffentliche Rufnummer NUM2 oder teilt mit, daß die gerufene Nummer nicht existiert. Hierfür durchsucht sie den Datensatz in der Speichereinrichtung MEM. Wenn sie fündig wird, übermittelt sie die Rufnummer an die Kommunikationseinrichtung COM. Ansonsten teilt sie mit, daß keine Rufnummer existiert. Die Gruppierungseinrichtung GROUP und die Adressierungseinrichtung SPACE können in diesen Suchvorgang eingreifen.

Die Gruppierungseinrichtung GROUP ist für die Bildung einer geschlossenen Benutzergruppe zuständig. Hierdurch soll erreicht werden, daß einige Endgeräte des virtuellen privaten Netzes VPNET nur von Endgeräten, die ebenfalls zum virtuellen privaten Netz VPNET gehören, erreicht werden können. Die Gruppierungseinrichtung GROUP erhält dazu von der Klassifizierungseinrichtung CLAS Daten, ob der Ruf aus dem virtuellen privaten Netz VPNET stammt oder nicht. Von der Kommunikationseinrichtung COM erhält sie Daten über die private Rufnummer NUM1. Die Gruppierungseinrichtung GROUP prüft nun, ob die Rufnummer NUM1 Mitglied der geschlossenen Benutzergruppe ist. Ist dies der Fall und der Ruf stammt nicht aus dem virtuellen privaten Netz VPNET, so wird der Umwerteinrichtung TRANS mitgeteilt, daß keine Suche und keine Rufnummernzuteilung erfolgen soll.

Es ist auch möglich, die Gruppierungseinrichtung GROUP so auszugestalten, daß mehrere geschlossene Benutzergruppen mit einer beliebigen Zusammensetzung möglich sind. Die Gruppierungseinrichtung GROUP müßte dafür noch zusätzlich Daten über die Rufnummer NUM3 erhalten. So könnte dann eine geschlossene Benutzergruppe aus einer beliebigen Kombination von Endgeräten des virtuellen privaten Netzes VPNET bestehen, in dem alle Endgeräte, die nicht zum virtuellen privaten Netz VPNET gehören, ein- oder ausgeschlossen sind.

Mit der Adressierungseinrichtung SPACE können unterschiedliche Adressräume für Rufe aus dem virtuellen privaten Netz VPNET und solche von außerhalb gebildet werden. Dies bedeutet, daß unter einer Rufnummer zwei verschiedene Endgeräte erreicht werden, je nachdem ob ein Ruf aus dem virtuellen privaten Netz VPNET stammt oder nicht. Solch eine Rufnummernzuteilung ist z.B. für eine Zentrale sinnvoll.

Die Adressierungseinrichtung SPACE erhält dazu von der Klassifizierungseinrichtung CLAS Daten darüber, ob der Ruf aus dem virtuellen privaten Netz VPNET stammt oder nicht. Von der Kommunikationseinrichtung COM erhält sie Daten über die Rufnummer NUM1. Die Adressierungseinrichtung überprüft nun, ob es sich bei der Rufnummer NUM1 um eine Nummer handelt, bei der zwei verschiedene Endgeräte möglich sind. Ist dies der Fall und der Ruf kommt von außerhalb, so wird der Umwerteinrichtung TRANS mitgeteilt, keine Suche durchzuführen. Anschließend wird ihr die entsprechende Rufnummer NUM2 mitgeteilt.

Es ist weiter möglich, denjenigen Rufen, die von außerhalb des virtuellen privaten Netzes VPNET stammen, je nach ihrem Ursprungsgebiet unterschiedlicher Adressräume zuzuteilen. So könnten Rufe von außerhalb z.B. zur nächstgelegenen Serviceabteilung einer Firma vermittelt werden. Hierfür müßten der Adressierungseinrichtung SPACE von der Kommunikationseinrichtung COM noch zusätzlich Daten über die Rufnummer NUM3 übermittelt werden.

Es ist auch möglich, auf die Gruppierungseinrichtung GROUP oder auf die Adressierungseinrichtung SPACE zu verzichten.

In dem Beispiel nach Fig. 1 wird die Anwendung des erfindungsgemäßen Verfahrens in einer Kommunikationsanordnung verdeutlicht, die aus einem privaten virtuellen Netz und einem öffentlichen Netz besteht. Es ist auch möglich, daß eine beliebige andere Zahl von privaten virtuellen Netzen Teil der Kommunikationsanordnung ist. Für jedes dieser virtuellen privaten Netze wäre ein eigener Dienstrechner zuständig, der über eine eigene Dienstkennung verfügen würde. Anhand dieser Dienstkennung würden dann die Dienstrechner von den Vermittlungsstellen SSP1 und SSP2 angesprochen. Es ist dabei auch möglich, daß die Funktionen von mehreren Dienstrechnern von einem Rechner übernommen wird.

## Patentansprüche

1. Verfahren zur Anrufleitung für ein privates virtuelles Netz (VPNET), das aus mehreren privaten Kommunikationseinheiten (COM2 bis COM4) besteht, die im Bedarfsfall über Wählverbindungen eines öffentlichen Netzes (PUBNET) miteinander verbunden werden,
bei dem für das Schalten der Wählverbindungen ein Dienst angewählt wird, der dann die weitere Vermittlung aufgrund eines privaten Nummerierungsplans veranlaßt,
**dadurch gekennzeichnet,** daß ein Teilnehmer (A, B, C) des öffentlichen Netzes (PUBNET) für einen Verbindungsaufbau mit einem Teilnehmer (A, B, C) des privaten Netzes (VPNET) denselben Dienst anwählt, der dann die weitere Vermittlung zu einer der privaten Kommunikationseinheiten (COM2 bis COM4) veranlaßt, daß der Dienst jeder von ihm veranlaßten Verbindung Tarifierungsattribute (TAT) zuweist, die die Tarifierunf der jeweiligen Verbindung im öffentlichen Netz betreffen und daß der Dienst einer Verbindung, die von einer der privaten Kommunikationseinheiten (COM2 bis COM4) angefordert wird, andere Tarifierungsattribute (TAT) zuweist als anderen Verbindungen.

2. Verfahren nach Anspruch 1,
dadurch gekennzeichnet, daß eine Nebenstellenanlage (PBX1 bis PBX3), die mit mehreren Endgeräten (E1, E2, E3; E4, E5, E6; E7, E8, E9) versehen ist, als Kommunikationseinheit (COM1 bis COM3) verwendet wird.

3. Verfahren nach Anspruch 1,
dadurch gekennzeichnet, daß ein einzelnes Endgerät (E10 bis E12) als Kommunikationseinheit (COM4 bis COM6) verwendet wird.

4. Verfahren nach Anspruch 1,
dadurch gekennzeichnet, daß über die Tarifierungsattribute (TAT) festgelegt wird, welcher Teilnehmer (A, B, C) eine Verbindung zahlt.

5. Verfahren nach Anspruch 1,
dadurch gekennzeichnet, daß über die Tarifierungsattribute (TAT) festgelegt wird, welche Tarifgruppe für eine Verbindung gilt.

6. Verfahren nach Anspruch 4,
dadurch gekennzeichnet, daß für alle Verbindungen innerhalb des privaten virtuellen Netzes (VPNET) der Betreiber dieses Netzes zahlt und ansonsten der anrufende Teilnehmer (A, B, C) belastet wird.

7. Verfahren nach Anspruch 6,
dadurch gekennzeichnet, daß der Dienst die Zugehörigkeit eines ankommenden Rufes zu dem privaten virtuellen Netz (VPNET) anhand einer mitgesendeten Rufnummer (PU2 bis PU3; NUM3) ermittelt, die dem rufenden Teilnehmer (A, B, C) gehört.

8. Verfahren nach Anspruch 6,
dadurch gekennzeichnet, daß der Dienst die Zugehörigkeit eines ankommenden Rufes zu dem privaten virtuellen Netz (VPNET) anhand eines mitgesendeten Kenncodes erkennt.

9. Dienstrechner (SERV) zum Anschluß an ein Netz, mit einer Schnittstelle zur Kommunikation mit mindestens einer Vermittlungseinrichtung (SSP1, SSP2) eines öffentlichen Netzes (PUBNET), mit einer Speichereinrichtung (MEM), die so ausgestaltet ist, daß in ihr Daten über einen privaten Nummerierungsplan eines privaten Netzes (VPNET) abgespeichert sind, der privaten Rufnummern (PR4 bis PR10) öffentliche Rufnummern (PU2 bis PU4) zuordnet, und mit einer Umwerteinrichtung (TRANS) zum Übersetzen von privaten Rufnummern (PR4 bis PR10) in öffentliche Rufnummern (PU2 bis PU4),
**dadurch gekennzeichnet,** daß der Dienstrechner (SERV) mit einer Tarifierungseinrichtung (TAR) zum Erzeugen von Tarifierungsattributen (TAT) versehen ist, die die Tarifierung der jeweiligen Verbindung im öffentlichen Netz betreffen, daß der Dienstrechner (SERV) mit einer Klassifizierungseinrichtung (CLAS) versehen ist, die so ausgestaltet ist, daß sie überprüft, ob eine Ruf von einer Kommunikationseinheit (COM2 bis COM4) des privaten Netzes stammt, und daß sie an die Tarifierungseinrichtung (TAR) Daten darüber sendet, ob der Ruf von einer Kommunikationseinheit (COM2 bis COM4) des privaten Netzes stammt, und daß die Tarifierungseinrichtung so ausgestaltet ist, daß sie einer Verbindung, die von einer der Privaten Kommunikationseinheiten (COM2 bis COM4) angefordert wird, andere Tarifierungsattribute (TAT) zuweist als anderen Verbindungen.

10. Vermittlungsstelle eines öffentlichen Netzes (PUBNET), mit mindestens einem Dienstrechner (SERV), der mit einer Speichereinrichtung (MEM), die so ausgestaltet ist, daß in ihr Daten über einen privaten Nummerierungsplan eines privaten Netzes (VPNET) abgespeichert sind, der privaten Rufnummern (PR4 bis PR10) öffentliche Rufnummern (PU2 bis PU4) zuordnet, und mit einer Umwerteinrichtung (TRANS) zum Übersetzen von privaten Rufnummern (PR4 bis PR10) in öffentliche Rufnummern (PU2 bis PU4) versehen ist,
**dadurch gekennzeichnet,** daß der Dienstrechner (SERV) mit einer Tarifierungseinrichtung (TAR) zum Erzeugen von Tarifierungsattributen (TAT) versehen ist, die die Tarifierung der jeweiligen Verbindung im öffentlichen Netz betreffen, daß der Dienstrechner (SERV) mit einer Klassifizierungseinrichtung (CLAS) versehen ist, die so ausgestaltet ist, daß sie überprüft, ob eine Ruf von einer Kommunikationseinheit (COM2 bis COM4) des privaten Netzes stammt, und daß sie an die Tarifierungseinrichtung (TAR) Daten darüber sendet, ob der Ruf von einer Kommunikationseinheit (COM2 bis COM4) des privaten Netzes stammt, und daß die Tarifierungseinrichtung so ausgestaltet ist, daß sie einer Verbindung, die von einer der privaten Kommunikationseinheiten (COM2 bis COM4) angefordert wird, andere Tarifierungsattribute (TAT) zuweist als anderen Verbindungen.

## Claims

1. A method of routing calls for a virtual private network (VPNET) comprising several private communication units (COM2 to COM4), which can be interconnected when necessary through the switched connections of a public network (PUBNET), where a service is dialed to make the switched connections, and then causes further switching on the basis of a private numbering plan, characterized in that a subscriber (A, B, C) of the public network (PUBNET), in order to establish a connection to a subscriber (A, B, C) of the private network (VPNET), dials the same service which then causes further switching to one of the private communication units (COM2 to COM4), that the service assigns charging attributes (TAT) to each connection it has made, which concern the charge rate of the respective connection in the public network, and that to a connection which is requested by one of the private communication units (COM2 to COM4) the service assigns different charging attributes (TAT) than to other connections.

2. A method as claimed in claim 1, characterized in that a private branch exchange (PBX1 to PBX3), which is equipped with several terminals (E1, E2, E3; E4, E5, E6; E7, E8, E9), is used as a communication unit (COM1 to COM3).

3. A method as claimed in claim 1, characterized in that a single terminal (E10 to E12) is used as a communication unit (COM4 to COM6).

4. A method as claimed in claim 1, characterized in that the charging attributes (TAT) establish which subscriber (A, B, C) pays for a connection.

5. A method as claimed in claim 1, characterized in that the charging attributes (TAT) establish which group of charges applies to a connection.

6. A method as claimed in claim 4, characterized in that all the connections within the virtual private network (VPNET) are paid by the operator of that network, otherwise the calling subscriber (A, B, C) is charged.

7. A method as claimed in claim 6, characterized in that the service determines by means of an inserted telephone number (PU2 to PU3; NUM3) belonging to the calling subscriber (A, B, C), if an incoming call belongs to the virtual private network (VPNET).

8. A method as claimed in claim 6, characterized in that the service determines by means of an inserted identification code if an incoming call belongs to the virtual private network (VPNET).

9. A service computer (SERV) for connection to a network, with an interface for communication with at least one exchange (SSP1, SSP2) of a public network (PUBNET), with a memory device (MEM) designed to store data about the private numbering plan of a private network (VPNET) which assigns public telephone numbers (PU2 to PU4) to private telephone numbers (PR4 to PR10), and with a translation device (TRANS) for translating private telephone numbers (PR4 to PR10) into public telephone numbers (PU2 to PU4), characterized in that the service computer (SERV) is equipped with a charging device (TAR) for producing charging attributes (TAT), which concern the charges for the respective connection in the public network, that the service computer (SERV) is equipped with a classification device (CLAS) which is designed to check whether a call originates from a communication unit (COM2 to COM4) of the private network, and that it sends data to the charging device (TAR) about whether the call originates from a communication unit (COM2 to COM4) of the private network, and that the charging device is designed to assign different charging attributes (TAT) to a connection which is requested by one of the private communication units (COM2 to COM4), than to other connections.

10. An exchange of a public network (PUBNET), with at least one service computer (SERV), which is equipped with a memory device (MEM) designed to store data about a private numbering plan of a private network (VPNET), which assigns public telephone numbers (PU2 to PU4) to private telephone numbers (PR4 to PR10), and with a translation device (TRANS) for translating private telephone numbers (PR4 to PR10) into public telephone numbers (PU2 to PU4), characterized in that the service computer (SERV) is equipped with a charging device (TAR) for producing charging attributes (TAT), which concern the charges for the respective connection in the public network, that the service computer (SERV) is equipped with a classification device (CLAS), which is designed to check whether a call originates from a communication unit (COM2 to COM4) of the private network, and that it sends data to the charging device (TAR) about whether the call originates from a communication unit (COM2 to COM4) of the private network, and that the charging device is designed to assign different charging attributes (TAT) to a connection which is requested by one of the private communication units (COM2 to COM4), than to other connections.

## Revendications

1. Procédé pour le routage d'appels dans un réseau virtuel privé (VPNET), composé de plusieurs unités de communication privées (COM2 à COM4), qui sont reliées ensemble en cas de besoin par des connexions commutées d'un réseau public (PUBNET), dans lequel, pour la commutation des connexions commutées, on appelle un service qui prend en charge la suite de la transmission sur la base d'un schéma de numérotation privé, caractérisé en ce qu'un abonné (A, B, C) du réseau public (PUBNET), pour établir la communication avec un abonné (A, B, C) du réseau privé (VPNET), appelle le même service qui prend alors en charge la suite de la transmission vers l'une des unités de communication privées (COM2 à COM4), en ce que le service affecte à chaque communication prise en charge par lui des attributs de tarification (TAT), qui concernent la tarification de la communication respective dans le réseau public, et en ce que le service affecte à une communication qui est demandée par l'une des unités de communication privées (COM2 à COM4) des attributs de tarification (TAT) différents par rapport à d'autres communications.

2. Procédé selon la revendication 1, caractérisé en ce qu'une installation téléphonique privée (PBX1 à PBX3) équipée de plusieurs terminaux (El, E2, E3; E4, E5, E6; E7, E8, E9) est utilisée comme une unité de communication (COM1 à COM3).

3. Procédé selon la revendication 1, caractérisé en ce qu'un terminal spécifique (E10 à E12) est utilisé comme une unité de communication (COM4 à COM6).

4. Procédé selon la revendication 1, caractérisé en ce que par l'intermédiaire des attributs de tarification (TAT) il est déterminé quel abonné (A, B, C) paie une communication.

5. Procédé selon la revendication 1, caractérisé en ce que par l'intermédiaire des attributs de tarification (TAT) il est déterminé quel groupe de tarification s'applique à une communication.

6. Procédé selon la revendication 4, caractérisé en ce que pour toutes les communications à l'intérieur du réseau virtuel privé (VPNET) l'exploitant de ce réseau paie, et sinon le correspondant qui appelle (A, B, C) est débité.

7. Procédé selon la revendication 6, caractérisé en ce que le service détermine l'appartenance d'un appel entrant au réseau virtuel privé (VPNET) à l'aide d'un numéro d'appel envoyé en même temps (PU2 à PU3; NUM3) qui appartient au correspondant qui appelle (A, B, C).

8. Procédé selon la revendication 6, caractérisé en ce que le service détermine l'appartenance d'un appel entrant au réseau virtuel privé (VPNET) à l'aide d'un code d'identification envoyé en même temps.

9. Serveur (SERV) pour la connexion à un réseau, avec une interface pour la communication avec au moins un dispositif de central téléphonique (SSP1, SSP2) d'un réseau public (PUBNET), avec un dispositif de mémoire (MEM) réalisé de sorte que des données concernant un schéma de numérotation privé d'un réseau privé (VPNET) y sont mémorisées, serveur qui affecte des numéros d'appel publics (PU2 à PU4) aux numéros d'appel privés (PR4 à PR10), et avec un dispositif de traduction (TRANS) pour traduire des numéros d'appel privés (PR4 à PR10) en numéros d'appel publics (PU2 à PU4), caractérisé en ce que le serveur (SERV) dispose d'un dispositif de tarification (TAR) pour générer des attributs de tarification (TAT) qui concernent la tarification de la communication respective dans le réseau public, en ce que le serveur (SERV) dispose d'un dispositif de classification (CLAS) réalisé de façon à vérifier si un appel provient d'une unité de communication (COM2 à COM4) du réseau privé, et en ce que le dispositif de tarification (TAR) envoie des données pour savoir si l'appel provient d'une unité de communication (COM2 à COM4) du réseau privé, et en ce que le dispositif de tarification est réalisé de façon à affecter à une communication qui est demandée par l'une des unités de communication privées (COM2 à COM4) des attributs de tarification (TAT) différents par rapport à d'autres communications.

10. Central téléphonique d'un réseau public (PUBNET), avec au moins un serveur (SERV) disposant d'un dispositif de mémoire (MEM) réalisé de sorte que des données concernant un schéma de numérotation privé d'un réseau privé (VPNET) y sont mémorisées, serveur qui affecte des numéros d'appel publics (PU2 à PU4) aux numéros d'appel privés (PR4 à PR10), et avec un dispositif de traduction (TRANS) pour traduire des numéros d'appel privés (PR4 à PR10) en numéros d'appel publics (PU2 à PU4), caractérisé en ce que le serveur (SERV) dispose d'un dispositif de tarification (TAR) pour générer des attributs de tarification (TAT) qui concernent la tarification de la communication respective dans le réseau public, en ce que le serveur (SERV) dispose d'un dispositif de classification (CLAS) réalisé de façon à vérifier si un appel provient d'une unité de communication (COM2 à COM4) du réseau privé, et en ce que le dispositif de tarification (TAR) envoie des données pour savoir si l'appel provient d'une unité de communication (COM2 à COM4) du réseau privé, et en ce que le dispositif de tarification est réalisé de façon à affecter à une communication qui est demandée par l'une des unités de communication privées (COM2 à COM4) des attributs de tarification (TAT) différents par rapport à d'autres communications.
